# EUROPÄISCHE PATENTANMELDUNG

(11) **EP 2 982 870 A1**
(43) Veröffentlichungstag der Anmeldung: **10.02.2016**
(21) Anmeldenummer: 14405059.8
(22) Anmeldetag: 06.08.2014
(51) Int. Cl.: F16B 5/00, E04F 11/18

(54) **Vorrichtung zum Befestigen einer Platte, insbesondere Glasplatte**

(71) Anmelder: Furrer, Jörg, 6048 Horw (CH)
(72) Erfinder: Furrer, Jörg, 6048 Horw (CH)

(57) **Zusammenfassung**

Eine Platte, insbesondere Glasplatte (9) wird mittels einer Befestigungsvorrichtung (1) an einer Tragkonstruktion (10) befestigt. An der Tragkonstruktion (10) ist ein erstes Profil (2) mit einer hinterschnittenen Nut (7) angeordnet und die Platte (9) ist mit einem zweiten Profil (3) verbunden, das ebenfalls mit einer hinterschnittenen Nut (7) ausgestattet ist. Ein drittes Profil (4) verbindet die beiden anderen Profile (2, 3) formschlüssig. Diese Verbindung kann Durchbiegungen der Platte (9) folgen, so dass Beschädigungen an der Platte (9) und der Befestigungsvorrichtung (1) vermieden werden.

## Beschreibung

Die Erfindung betrifft eine Vorrichtung zum Befestigen einer Platte, insbesondere Glasplatte nach dem Oberbegriff des Patentanspruchs 1.

An Gebäuden, Terrassen oder Treppen werden Platten, häufig Glasplatten, insbesondere Verbundglasplatten als Begrenzung und Absturzsicherung eingesetzt. Derartige Platten müssen gewisse Sicherheitsanforderungen erfüllen, die nicht nur die Platte selbst, sondern auch deren Befestigungsvorrichtungen betreffen. Dabei muss der Nachweis der Tragfähigkeit unter statischen und dynamischen, d.h. stossartigen Einwirkungen erbracht werden. Für letzteres wird die so genannte Pendelschlagprüfung angewendet, bei der eine aufgehängte Masse gegen die Platte schlägt. Insbesondere Verbundglasplatten überstehen die Pendelschlagprüfung auf Grund ihrer Elastizität relativ problemlos. Schwierigkeiten treten jedoch oft bei den Befestigungsvorrichtungen solcher Platten auf und bestehen insbesondere darin, dass sich die Platte unter Belastung elastisch verbiegt, wodurch sich deren Ränder aufeinander zu bewegen. Bei bekannten Befestigungsvorrichtungen, bei denen die Ränder der Platte geklemmt werden, besteht das Risiko, dass die Ränder der Platte bei einer Durchbiegung ausser Eingriff mit den klemmenden Befestigungsvorrichtungen geraten. Bei bekannten Befestigungsvorrichtungen, bei denen die Platte im Bereich der Ränder durchdrungen wird, besteht das Risiko, dass bei einer Durchbiegung der Platte diese selbst oder die Befestigungsvorrichtung beschädigt wird.

Eine bekannte Massnahme zur Behebung der oben geschilderten Probleme besteht darin, die Platten dicker auszuführen, als es rein festigkeitsmässig notwendig wäre, um deren Durchbiegung unter Belastung zu reduzieren. Dies führt aber dazu, dass die Platten schwerer werden, was zu erhöhten Anforderungen an die Befestigungsvorrichtungen führt, den Transport und die Montage erheblich erschwert und die Kosten erhöht.

Ausgehend von diesem Stand der Technik liegt der Erfindung die Aufgabe zugrunde, eine Vorrichtung zum Befestigen einer Platte, insbesondere Glasplatte vorzuschlagen, die einfach herzustellen und anzuwenden ist und die Platte auch unter Durchbiegung sicher hält.

Diese Aufgabe wird durch die im kennzeichnenden Teil des Patentanspruchs 1 angegebenen Merkmale gelöst.

Diese erfindungsgemässe Lösung hat insbesondere den Vorteil, dass das dritte Bauteil ähnlich wie ein Gelenk wirkt, das bei einer Durchbiegung der Platte sowohl dem Winkel als auch der Verlagerung der zugeordneten Plattenkante in Richtung zur gegenüberliegenden Plattenkante folgen kann. Dem entsprechend kann mit dünneren Platten gearbeitet werden. Ausserdem werden durch das dritte Bauteil Ungenauigkeiten bei der Montage der Tragkonstruktion ausgeglichen. Ein weiterer wesentlicher Vorteil besteht darin, dass die Montage der Platte sehr einfach ist, indem diese in Position gebracht und dann das dritte Bauteil in die Nuten des ersten und zweiten Bauteils eingeschoben wird.

Ausführungsarten der Erfindung sind in den abhängigen Patentansprüchen angegeben.

Ein Ausführungsbeispiel der Erfindung wird nachstehend unter Bezugnahme auf die angefügten Zeichnungen beschrieben. Es zeigt
- Figur 1: eine abgebrochene, perspektivische Ansicht auf den oberen Bereich eines Pfostens mit zwei Befestigungsvorrichtungen und zwei damit befestigte Platten;
- Figur 2: eine abgebrochene, perspektivische Ansicht auf den unteren Bereich des Pfostens von Figur 1, wobei die linke Platte weggelassen ist und
- Figur 3: eine Draufsicht auf die Vorrichtung in einem gegenüber Figur 1 und 2 vergrösserten Massstab.

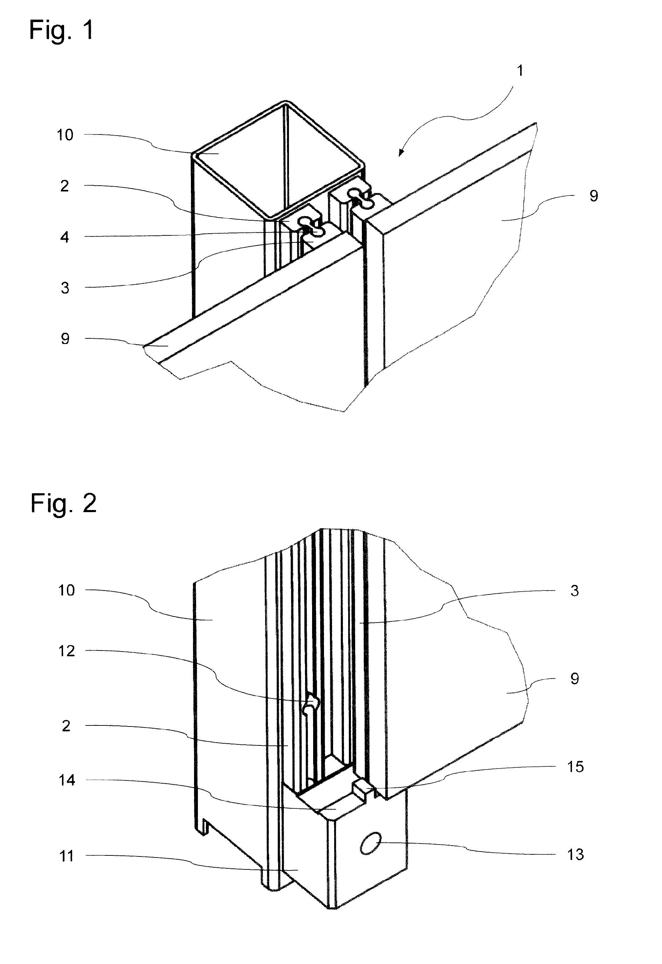

Die Befestigungsvorrichtung 1 umfasst ein erstes Profil 2, das im Beispiel gemäss Figur 1 und 2 an einem Pfosten 10 angeordnet, beispielsweise angeschraubt ist. In Figur 2 ist ein entsprechendes Befestigungsloch 12 sichtbar. Selbstverständlich könnte das erste Profil 2 auch in anderer Weise mit dem Pfosten 10 verbunden sein, beispielsweise durch Schweissen. Alternativ kann das erste Profil 2 einstückig mit dem Pfosten 10 verbunden sein. Ein zweites Profil 3 ist im dargestellten Beispiel gleich ausgebildet wie das erste Profil 2 und spiegelbildlich zu diesem angeordnet. Dieses zweite Profil 3 ist mit einer Platte 9, beispielsweise einer Glasplatte, insbesondere einer Verbundglasplatte verbunden, beispielsweise durch Kleben. Die beiden Profile 2 und 3 sind durch ein drittes Profil 4 formschlüssig miteinander verbunden.

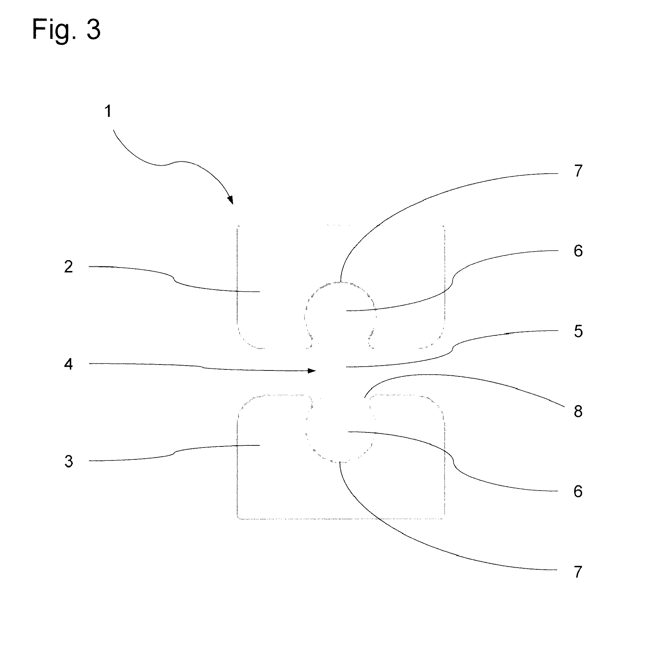

Für die Beschreibung der formschlüssigen Verbindung der Profile 2, 3 und 4 wird auf Figur 3 Bezug genommen, die eine vergrösserte Draufsicht auf die Vorrichtung 1 zeigt. Das erste 2 und zweite Profil 3 weist eine hinterschnittene Längsnut 7 auf, deren Öffnungsweite 8 gegenüber dem übrigen Bereich der Nut verringert ist. Die Innenwand der Längsnut 7 hat im Querschnitt gesehen die Form eines Kreisabschnitts. Das dritte Profil 4 umfasst einen relativ flachen Mittelteil 5 und beidseitig daran anschliessend einen Randwulst 6, dessen Form der Längsnut 7 entspricht und geringfügig kleiner ist als diese, so dass das dritte Profil 4 mit etwas Spiel in die Längsnuten 7 der beiden anderen Profile 2, 3 geschoben werden kann. Wie in Figur 3 deutlich zu erkennen ist, ist die lichte Weite des Öffnungsbereichs 8 der Längsnut 7 grösser als die Dicke des Mittelteils 5 des dritten Profils 4, so dass letzteres in der Längsnut 7 in einem gewissen Winkelbereich verschwenkt werden kann. Alle drei Profile 2, 3 und 4 sind vorteilhaft etwa gleich lang wie die entsprechende Seitenkante der zu befestigenden Platte 9. Alternativ können die genannten Profile aber auch nur über einen Bruchteil der Plattenhöhe verlaufen, wobei mehrere Profilabschnitte in der Art von Scharnieren entlang der Plattenkante angeordnet sein können. In diesem Fall muss durch geeignete Massnahmen verhindert werden, dass das dritte Profil 4 durch sein Eigengewicht aus den Längsnuten 7 herausfällt.

Mit den bis hierher beschriebenen Massnahmen kann die Befestigungsvorrichtung Kräfte übertragen, die in der Zeichnungsebene der Figur 3 wirken, nicht aber rechtwinklig zu dieser Ebene wirkende Kräfte, also insbesondere die Gewichtskräfte der Platte 9, die in Längsrichtung der Profile 2 und 3 wirken. Für die Aufnahme dieser Gewichtskräfte ist eine Stütze 11 vorhanden, die in Figur 2 dargestellt ist. Die Stütze 11 kann ein Befestigungsloch 13 zur Befestigung an einem Pfosten 10 oder einem Gebäudeteil aufweisen. Eine Auflagefläche 14 stützt die Platte 9 vertikal ab. Die in Figur 2 dargestellte Stütze 11 ist für zwei benachbart zueinander befestigte Platten 9 ausgebildet und weist auf der Stützfläche 14 einen Distanznocken 15 für die Platten 9 auf.

Die Montage von Platten ist mit der beschriebenen Befestigungsvorrichtung 1 äusserst einfach. Zunächst wird das erste Profil 2 an Gebäudeteil oder Pfosten 10 befestigt, sofern es nicht bereits einstückig mit dem Pfosten verbunden ist. Unabhängig davon wird das zweite Profil 3 am Rand der Platte 9 angebracht, beispielsweise durch Kleben. Nun wir die Platte 9 mit dem daran angeordneten zweiten Profil 3 auf die Auflagefläche 14 der Stütze 11 gehoben und die Längsnut 7 des ersten 2 und zweiten Profils 3 werden ungefähr miteinander ausgerichtet. Jetzt braucht nur noch das dritte Profil 4 von oben in die Längsnuten 7 geschoben zu werden, um eine formschlüssige Verbindung herzustellen. Ein nicht zeichnerisch dargestellter Abschlussdeckel kann die Befestigungsvorrichtung 1 oben vervollständigen und die so zusammengestellten Teile gegen eine Demontage und gegen das Eindringen von Wasser und Schmutz in die Längsnuten 7 sichern.

Wird die Platte 9 einer mechanischen Belastung unterworfen, etwa durch die eingangs erwähnte Pendelschlagprüfung, kann sie sich ungehindert elastisch durchbiegen, weil die Befestigungsvorrichtung aufgrund der beschriebenen Gestaltung sowohl ein winkliges Nachgeben als auch einen linearen Versatz gestattet.

### Bezugszeichenliste

- 1: Befestigungsvorrichtung
- 2: erstes Profil
- 3: zweites Profil
- 4: drittes Profil
- 5: Mittelteil
- 6: Randwulst
- 7: Längsnut
- 8: Öffnungsweite
- 9: Platte
- 10: Pfosten
- 11: Stütze
- 12: Befestigungsloch
- 13: Befestigungsloch
- 14: Auflagefläche
- 15: Distanznocken

## Patentansprüche

**1.** Vorrichtung zum Befestigen einer Platte (9), insbesondere Glasplatte, an einer Tragkonstruktion (10), enthaltend ein mit der Tragkonstruktion (10) zu verbindendes erstes Bauteil (2) und ein mit der Platte (9) zu verbindendes zweites Bauteil (3), **dadurch gekennzeichnet, dass** das erste Bauteil (2) und das zweite Bauteil (3) jeweils eine hinterschnittene Nut (7) haben und dass ein drittes Bauteil (4) mit zwei gegenüberliegenden Erweiterungen (6) in die Nuten (7) eingreift und so das erste Bauteil (2) und das zweite Bauteil (3) formschlüssig miteinander verbindet.

**2.** Vorrichtung nach Anspruch 1, **dadurch gekennzeichnet, dass** das erste Bauteil ein längliches Profil (2) ist.

**3.** Vorrichtung nach einem der vorangehenden Ansprüche, **dadurch gekennzeichnet, dass** das zweite Bauteil ein längliches Profil (3) ist.

**4.** Vorrichtung nach einem der vorangehenden Ansprüche, **dadurch gekennzeichnet, dass** das dritte Bauteil ein längliches Profil (4) ist.

**4.** Vorrichtung nach einem der vorangehenden Ansprüche, **dadurch gekennzeichnet, dass** die Nut (7) im ersten und/oder zweiten Bauteil (2, 3) einen Querschnitt in der Form eines Kreisabschnitts hat.

**5.** Vorrichtung nach einem der vorangehenden Ansprüche, **dadurch gekennzeichnet, dass** mindestens eine der Erweiterungen (6) des dritten Bauteils (4) einen Querschnitt in der Form eines Kreisabschnitts hat.

**6.** Vorrichtung nach den Ansprüchen 5 und 6, **dadurch gekennzeichnet, dass** die Öffnungsweite (8) der Nut (7) im ersten und/oder zweiten Bauteil (2, 3) grösser ist als die Dicke des dritten Bauteils (4) im Mittelteil (5) zwischen den beiden Erweiterungen (6), so dass das dritte Bauteil (4) gegenüber dem ersten und zweiten Bauteil (2, 3) schwenkbar ist.

**7.** Vorrichtung nach einem der vorangehenden Ansprüche, **gekennzeichnet durch** eine mit der Tragkonstruktion (10) zu verbindende Stütze (11), an der eine Kante der Platte (9) und/oder des zweiten Bauteils (3) aufliegt.

**8.** Vorrichtung nach einem der vorangehenden Ansprüche, **dadurch gekennzeichnet, dass**, das erste Bauteil (2) einstückig mit der Tragkonstruktion (10) ausgebildet ist.
